# EUROPEAN PATENT SPECIFICATION

(11) **EP 1 451 476 B1**
(45) Date of publication and mention of the grant of the patent: **31.08.2005**
(21) Application number: 02796550.8
(22) Date of filing: 22.11.2002
(51) Int. Cl.: F16B 2/18, F16B 2/12, F16B 2/10

(54) **A CONNECTING DEVICE FOR DISPLAY STRUCTURES**
VERBINDUNGSVORRICHTUNG FÜR AUSSTELLUNGSSTRUKTUREN
DISPOSITIF DE CONNEXION POUR STRUCTURES DE PRESENTATION.

(30) Priority: 04.12.2001 IT PD20010283
(43) Date of publication of application: 01.09.2004
(73) Proprietor: ALU S.P.A., 36060 Romano d'Ezzelino (Vicenza) (IT)
(72) Inventor: MANIEZZO, Dario, Luigi, I-36060 Romano D'Ezzelino (IT)
(74) Representative: Cantaluppi, Stefano
(86) International application number: PCT/EP2002/013171
(87) International publication number: WO 2003/048588

(56) References cited:
- DE-A- 3 237 627
- FR-A- 2 659 400
- GB-A- 1 596 268
- US-A- 4 646 398

## Description

### Technical field of the invention

The present invention relates to a connecting device for display structures according to the preamble to the main claim.

### Technological background

The invention is for application in particular but not exclusively in the setting-up of sectional display structures in which tubular elements are used, which have different cross-sections along their length. This is typically the case in the self-supporting pillars which are widely used in this field. In fact, by virtue of their telescopic structure, these pillars can be adapted to fit rooms of different heights by being extended under pressure, for example, between the floor and the ceiling.

Although, on the one hand, the telescopic structure of the self-supporting pillars permits the above-described versatility of use, on the other hand, it requires the use of connecting devices which can be adapted to the different cross-sections of the pillars so as not to detract from the versatility which is required of structures of this type.

Devices of this type, the function of which is to constitute the support and connecting points for transverse elements of the display structure such as connecting shelves or frames are known, for example, from the Applicant's production; such a device comprises a sleeve which is arranged around a pillar and is slidable along the length thereof, as well as means for clamping the sleeve onto the pillar. To satisfy the above-described functional requirements, the clamping means comprise a pair of opposed jaws which are movable radially against the pillar by screw means. However, these clamping means are rather impractical in use and are not very pleasing aesthetically.

### Description of the invention

The main task of the present invention is to provide a connecting device for display structures which is designed structurally and functionally to overcome the limitations set out above with reference to the prior art mentioned.

Within the scope of this task, a further object of the invention is to provide a device of relatively low weight and pleasing appearance.

This task and this object are achieved by the present invention by means of a connecting device having the characteristics recited in the appended claims.

### Brief description of the drawings

The characteristics and the advantages of the invention will become clearer from the detailed description of a preferred embodiment thereof which is described by way of non-limiting example with reference to the appended drawings, in which:
Figure 1 is a perspective view, from above, of a connecting device for display structures formed in accordance with the present invention,
Figures 2 and 3 are a plan view and a front view of the device of Figure 1, respectively,
Figure 4 is a section taken on the line IV-IV of Figure 3, and
Figure 5 is a section similar to Figure 4, through a detail of the device of Figure 1.

### Preferred embodiment of the invention

In the drawings, a connecting device for display structures formed in accordance with the present invention is generally indicated 1.

The device 1 comprises an openable sleeve 1a including a pair of shells 2, 3 which have facing concavities and are articulated to one another at respective first ends, for pivoting about an axis X. At respective opposite, free ends 2a, 3a, the shells 2, 3 comprise engagement means and complementary engagement means 4, respectively, to permit, alternatively, closure or opening of the sleeve 1a.

Preferably, the engagement means and the complementary engagement means 4 are of the snap-engagement type and comprise a pair of substantially parallel hooks 5 projecting from the end 2a and housed releasably in respective seats 6 defined in the end 3a of the shell 3. The seats 6 are shaped so as to engage the hooks 5, preventing them from slipping out accidentally. Moreover, the hooks are urged into engagement in the respective seats 6 by resilient means, not shown in the appended drawings, and are opened by a push-button 7.

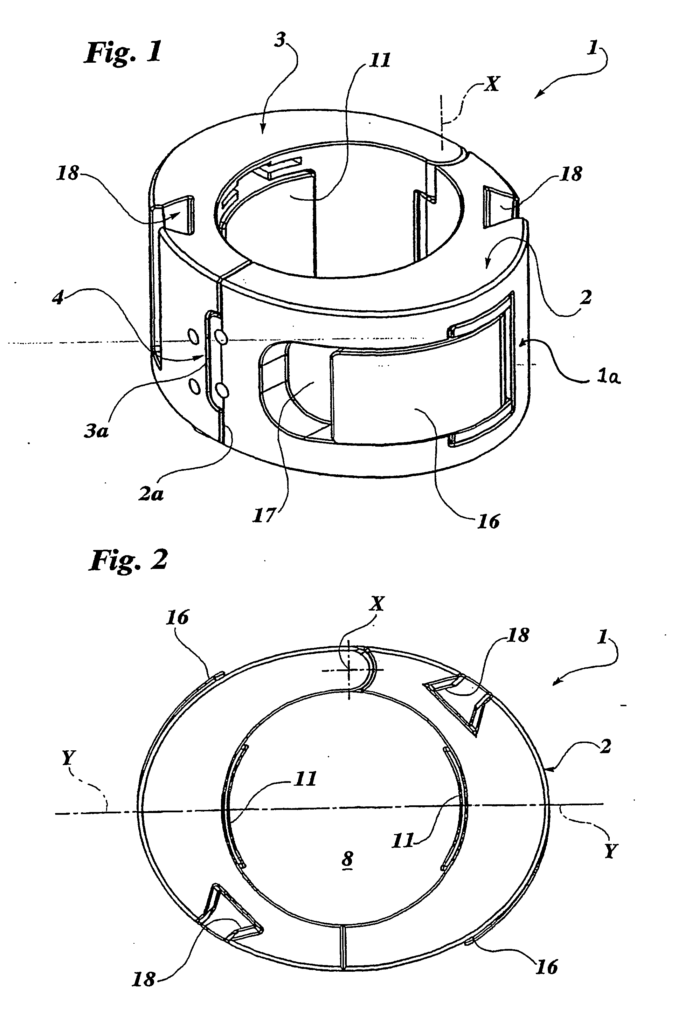

The shape of the shells 2, 3 is such that, when the device 1 is pivoted to the closure position (Figure 2), a central through-hole 8 of circular cross-section is defined between them and can house an element of similar cross-section, for example, a self-supporting pillar of a display structure (not shown).

In order to fix the sleeve 1a firmly in the desired position on the element, the device 1 comprises clamping means 10 including two jaws, both indicated 11, each housed in a respective seat 12 formed in a central position in a respective shell 2, 3. The jaws 11 are arranged symmetrically so as to face one another when the sleeve 1a is in the closed position and are slidable away from and towards the sleeve 1a, within the respective seats 12, along a radial axis Y, thus defining an extended position and a retracted position in which they project to a greater or to a lesser extent from the shell 2, 3. Each jaw 11 is urged resiliently into the retracted position by resilient means (not shown) housed in the seats 12 and acting between the jaw and the sleeve 1a.

The clamping means 10 further comprise, for each jaw 11, a cam 14 which is in abutment with the jaw and is articulated on a pin 15 for pivoting about a respective axis Z parallel to the axis X. When the cam 14 pivots about the axis Z, its eccentricity leads to radial movement of the jaw 11 in abutment therewith, towards the extended position.

To facilitate the pivoting of the cam 14, an operating lever 16 extends therefrom on the side remote from the jaw 11. When the jaw 11 is moved to the extended position by the cam 14, the lever 16 is advantageously housed in a seat 17 defined within the profile of the respective shell 2, 3.

With particular reference to Figure 2, it should be noted that the shells 2 and 3 have enlarged cross-sections in their central portions in which the clamping means 10 are disposed, whereas they have narrower cross-sections in their end regions. The device 1 thus retains a fairly low overall weight, adopting a substantially elliptical outer shape.

Engagement means are also provided on the device 1 for the connection of fittings, for example, shelves or transverse bars of the display structure, to the sleeve 1a. These engagement means comprise recesses 18 with dovetail-shaped cross-sections, formed in the shells 2 and 3, respectively, and extending parallel to the axis X. All of the recesses 18 are open at the same end of the sleeve 1a but are closed at the opposite end.

It should be noted that the recesses 18 are arranged in mutually facing positions between the clamping means 10 and the ends of the shells 2, 3 so as to permit better balancing of any loads applied to the device 1.

According to a main characteristic of the invention, each cam 14 is movable relative to the respective shell 2, 3 along a radial axis of the sleeve 1a between a first operative position and a second operative position. For this purpose, guide means for the cam 14 are provided on each shell 2, 3 and comprise a pair of channels 19 in which the opposite ends of the pin 15 are engaged for sliding.

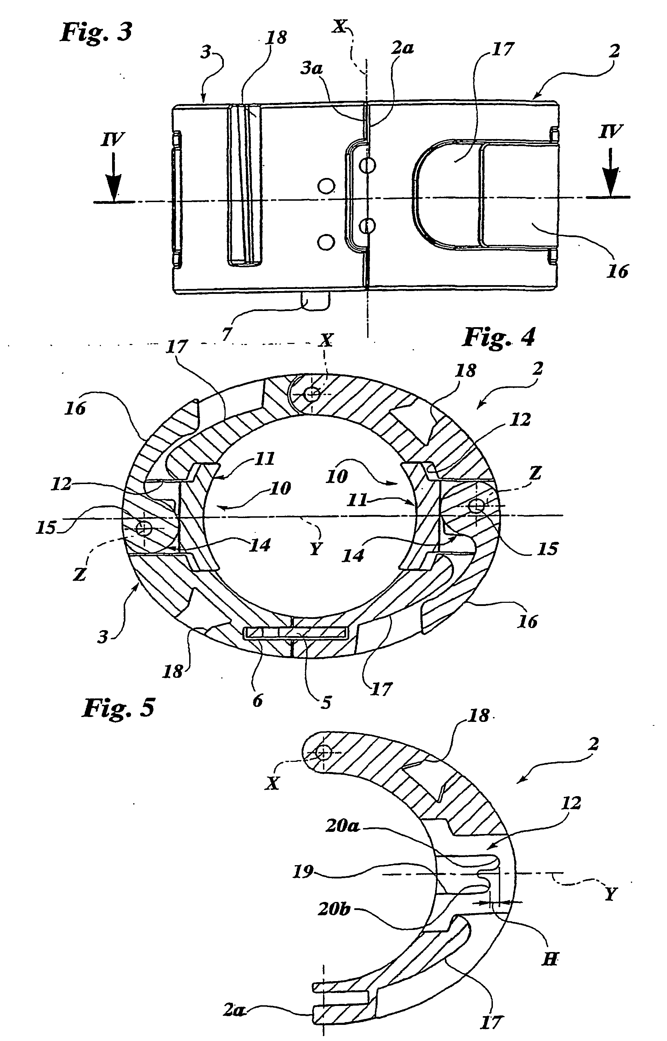

The shape of the channels 19 is such as to define two pocket-like seats 20a, 20b which are open towards the jaw 11 (Figure 5) and in which the ends of the pin 15 can come into abutment. The pocket-like seats 20a, 20b are spaced apart radially by a distance H substantially equal to half of the difference between the cross-sections of the element of the display structure on which the device 1 is to be fixed. In particular, for self-supporting pillars of telescopic structure, the distance H will be equal to the difference between the radii of the respective tubular elements.

To mount the connecting device 1 on a display-structure element having different cross-sections the sleeve 1a is arranged around the element by relative pivoting of the shells 2, 3 about the axis X and snap-closure of the engagement means 4. The cams 14 are then moved to the first operative position or to the second (corresponding to the housing of the pin 15 in the pocket-like seat 20a or 20b, respectively), according to the cross-section of the element at the point at which the device 1 is to be fixed.

This positioning is performed by acting manually on the respective levers 16 in opposition to the resilient means acting on the jaws 11.

The levers 16 are then pivoted about the respective axes Z, leading to corresponding pivoting of the cams 14 and to the movement of the respective jaw 11 to the extended position, against the element. The abutment of the jaw ensures that the device 1 is fixed firmly on the element of the display structure by friction. Once the device 1 has been fixed in the desired position it can support two fittings suitably engaged in the recesses 18.

It should be noted that, as a result of the pivoting of the levers 16 to the position for closure of the jaws 11, the levers are housed in the seats 17, within the profile of the sleeve, thus limiting the possibility of accidental knocks (Figures 1 and 2).

To dismantle the device 1 is suffices to lift the levers 16 so that the respective jaws 11 are returned to the retracted position (which is also facilitated by the action of the resilient means). The sleeve 1a can then be opened by acting on the push-button 7.

In the preferred embodiment described above, the device 1 is designed for adaptation to two different cross-sections of the element of the display structure, but the principle upon which the invention is based can clearly also be used to produce connecting devices for coupling with elements having three or more different cross-sections, by the provision of an adequate number of suitably spaced-apart pocket-like seats.

The present invention thus achieves the objects proposed, combining considerable practicality of use with good adaptability for fitting in display structures. A further advantage of the invention is the attractive overall aesthetic effect which is also enhanced by the elliptical shape.

## Claims

1. A connecting (1) device for display structures, comprising a sleeve (1a) with articulated shells (2, 3) which can be arranged around elements of variable cross-section of the display structure, and clamping means (10) for clamping the sleeve onto the element, the clamping means including at least one jaw (11) which is movable away from and towards the sleeve, **characterized in that** the clamping means comprise a respective cam (14) which is pivotable in order to bring about radial slidable movement of the at least one jaw (11) away from and towards the sleeve (1a), the respective cam being movable along a radial axis (Y) of the sleeve in order to vary the position of the at least one jaw in dependence on the cross-section of the element.

2. A device according to Claim 1 in which two of the said jaws (11) are arranged symmetrically and opposite one another, and each respective cam (14) is movable between a first operative position and at least one second operative position which are spaced apart radially by a distance (H) substantially equal to half of the difference between the cross-sections of the elements.

3. A device according to Claim 2 in which guide means for the respective cam (14) are provided on the sleeve (1a), for guiding the movement of the cam between the first operative position and the at least one second operative position, the guide means comprising at least one channel (19) in which an articulation pin (15) of the cam is slidably engaged.

4. A device according to one or more of the preceding claims in which the clamping means (10) comprise an operating lever (16) extending from the respective cam in (14) order to bring about pivoting thereof.

5. A device according to Claim 4 in which the operating lever (16) is housed substantially within the profile of the sleeve (1a).

6. A device according to one or more of the preceding claims in which the sleeve (1a) can be closed releasably around the element, the sleeve (1a) comprising two shells (2, 3) which are articulated to one another at a first end, and engagement means and complementary engagement means (4) which are arranged at the opposite ends (2a, 3a) of the two shells (2, 3), respectively.

7. A device according to Claim 6 in which the engagement means and the complementary engagement means (4) are of the snap-engagement type.

8. A device according to Claim 6 or Claim 7 in which the clamping means (10) are arranged symmetrically on the shells (2, 3) in central positions relative to the said ends.

9. A device according to Claim 8 in which the sleeve (1a) has a symmetrically enlarged cross-section in the region of the clamping means and a symmetrically narrower cross-section in the region of the ends.

## Patentansprüche

1. Verbindungsvorrichtung (1) für Ausstellungsstrukturen umfassend eine Hülse (1a) mit gelenkig angebrachten Teilen (2, 3), die um Elemente mit variablem Querschnitt der Ausstellungsstruktur angeordnet werden kann, und Spannmittel (10) zum Festspannen der Hülse auf dem Element, wobei die Spannmittel mindestens eine Backe (11) aufweisen, die von der Hülse weg und auf sie zu beweglich ist, **dadurch gekennzeichnet, dass** die Spannmittel einen entsprechenden Nocken (14) umfassen, der schwenkbar ist, um eine radiale Gleitbewegung mindestens einer Backe (11) von der Hülse (1a) weg und auf sie zu zu erreichen, wobei der entsprechende Nocken entlang einer radialen Achse (Y) der Hülse beweglich ist, um die Position der mindestens einen Backe in Abhängigkeit vom Querschnitt des Elements zu verändern.

2. Vorrichtung nach Anspruch 1, in der zwei der Backen (11) symmetrisch und gegenüberliegend zueinander angeordnet sind, und jeder entsprechende Nocken (14) zwischen einer ersten Funktionsposition und mindestens einer zweiten Funktionsposition beweglich ist, die radial um einen Abstand (H) beabstandet sind, der im Wesentlichen gleich der Hälfte der Differenz zwischen den Querschnitten der Elemente ist.

3. Vorrichtung nach Anspruch 2, in der Führungsmittel für den entsprechenden Nocken (14) auf der Hülse (1a) vorgesehen sind, um die Bewegung des Nockens zwischen der ersten Funktionsposition und der mindestens einen zweiten Funktionsposition zu führen, wobei die Führungsmittel mindestens einen Kanal (19) umfassen, in dem ein Gelenkstift (15) des Nockens verschiebbar eingreift.

4. Vorrichtung nach einem oder mehreren der vorhergehenden Ansprüche, in der die Spannmittel (10) einen Betätigungshebel (16) umfassen, der sich vom entsprechenden Nocken (14) erstreckt, um sein Schwenken zu bewirken.

5. Vorrichtung nach Anspruch 4, in der der Betätigungshebel (16) im Wesentlichen im Profil der Hülse (1 a) untergebracht ist.

6. Vorrichtung nach einem oder mehreren der vorhergehenden Ansprüche, in der die Hülse (1a) lösbar um das Element geschlossen werden kann, wobei die Hülse (1a) zwei Teile (2, 3) umfasst, die an einem ersten Ende aneinander gelenkig angebracht sind, und Eingriffsmittel und komplementäre Eingriffsmittel (4), die jeweils an den gegenüberliegenden Enden (2a, 3a) der beiden Teile (2, 3) angeordnet sind.

7. Vorrichtung nach Anspruch 6, in der die Eingriffsmittel und die komplementären Eingriffsmittel (4) vom Typ eines Schnappverschlusses sind.

8. Vorrichtung nach Anspruch 6 oder Anspruch 7, in der die Spannmittel (10) symmetrisch auf den Teilen (2, 3) in mittleren Positionen in Bezug auf die Enden angeordnet sind.

9. Vorrichtung nach Anspruch 8, in der die Hülse (1a) im Bereich der Spannmittel einen symmetrisch erweiterten Querschnitt aufweist und im Bereich der Enden einen symmetrisch verengten Querschnitt.

## Revendications

1. Dispositif de connexion (1) pour structures de présentation, comprenant un manchon (1a) avec des coques articulées (2, 3) qui sont agencées autour d'éléments à section variable de la structure de présentation, et des moyens de serrage (10) pour serrer le manchon sur l'élément, les moyens de serrage comprenant au moins une mâchoire (11) qui est mobile à distance de et vers le manchon, **caractérisé en ce que** les moyens de serrage comprennent une came (14) respective qui peut pivoter afin de provoquer le mouvement coulissant radial de la au moins une mâchoire (11) à distance de et vers le manchon (1a), la came respective étant mobile le long d'un axe radial (Y) du manchon afin de modifier la position de la au moins une mâchoire en fonction de la section de l'élément.

2. Dispositif selon la revendication 1 dans lequel deux desdites mâchoires (11) sont agencées de manière symétrique et opposée entre elles, et chaque came respective (14) est mobile entre une première position opérationnelle et au moins une seconde position opérationnelle qui sont espacées radialement par une distance (H) sensiblement égale à la moitié de la différence entre les sections des éléments.

3. Dispositif selon la revendication 2, dans lequel on prévoit des éléments de guidage pour la came respective (14) sur le manchon (1a) pour guider le mouvement de la came entre la première position opérationnelle et la au moins une seconde position opérationnelle, les moyens de guidage comprenant au moins un canal (19) dans lequel une broche d'articulation (15) de la came est mise en prise de manière coulissante.

4. Dispositif selon une ou plusieurs des revendications précédentes, dans lequel les moyens de serrage (10) comprennent un levier de commande (16) s'étendant à partir de la came respective (14) afin de provoquer son pivotement.

5. Dispositif selon la revendication 4 dans lequel le levier de commande (16) est logé sensiblement à l'intérieur du profil du manchon (1a).

6. Dispositif selon une ou plusieurs des revendications précédentes, dans lequel le manchon (1a) peut être fermé de manière amovible autour de l'élément, le manchon (1a) comprenant deux coques (2, 3) qui sont articulées l'une par rapport à l'autre au niveau d'une première extrémité, et des moyens de mise en prise et des moyens de mise en prise complémentaires (4) qui sont agencés au niveau des extrémités opposées (2a, 3a) des deux coques (2, 3) respectivement.

7. Dispositif selon la revendication 6, dans lequel les moyens de mise en prise et les moyens de mise en prise complémentaires (4) sont du type à mise en prise par enclenchement.

8. Dispositif selon la revendication 6 ou la revendication 7, dans lequel les moyens de serrage (10) sont agencés symétriquement sur les coques (2, 3) dans des positions centrales par rapport auxdites extrémités.

9. Dispositif selon la revendication 8, dans lequel le manchon (1a) a une section symétriquement agrandie dans la région des moyens de serrage et une section symétriquement plus étroite dans la région des extrémités.
